# EUROPÄISCHE PATENTSCHRIFT

(11) **EP 3 818 628 B1**
(45) Veröffentlichungstag und Bekanntmachung des Hinweises auf die Patenterteilung: **21.12.2022**
(21) Anmeldenummer: 19726976.4
(22) Anmeldetag: 24.05.2019
(51) Int. Cl.: H02P 29/02

(54) **VERFAHREN UND VORRICHTUNG ZUM BETREIBEN EINES ELEKTROMOTORS FÜR EINE ELEKTRISCHE BREMSEINRICHTUNG**
METHOD AND APPARATUS FOR OPERATING AN ELECTRIC MOTOR FOR AN ELECTRIC BRAKING DEVICE
PROCÉDÉ ET DISPOSITIF DESTINÉS À FAIRE FONCTIONNER UN MOTEUR ÉLECTRIQUE POUR UN ÉQUIPEMENT DE FREIN ÉLECTRIQUE

(30) Priorität: 07.07.2018 DE 102018211239
(43) Veröffentlichungstag der Anmeldung: 12.05.2021
(73) Patentinhaber: Robert Bosch GmbH, 70442 Stuttgart (DE)
(72) Erfinder: BAEHRLE-MILLER, Frank, 71101 Schoenaich (DE); WIENKEN, Hubertus, 74243 Langenbrettach (DE); ZECHMEISTER, Steffen, 74206 Bad Wimpfen (DE); KEARNEY, Norbert, 71543 Wuestenrot (DE)
(86) Internationale Anmeldenummer: PCT/EP2019/063490
(87) Internationale Veröffentlichungsnummer: WO 2020/011439

(56) Entgegenhaltungen:
- DE-A1-102015 214 346
- US-A1- 2006 181 819

## Beschreibung

### Stand der Technik

Die Offenbarung betrifft ein Verfahren zum Betreiben eines Elektromotors für eine elektrische Bremseinrichtung, insbesondere für eine elektrische Feststellbremse eines Fahrzeugs, insbesondere Kraftfahrzeugs, wobei die Bremseinrichtung durch einen Betrieb des Elektromotors in einer ersten Drehrichtung in einen ersten Betriebszustand und durch einen Betrieb des Elektromotors in einer von der ersten Drehrichtung verschiedenen zweiten Drehrichtung in einen zweiten Betriebszustand versetzbar ist.

Die Offenbarung betrifft ferner eine entsprechende Vorrichtung, ein Steuergerät für eine elektrische Bremseinrichtung, und eine elektrische Bremseinrichtung.

Es ist bekannt, elektrische Leitungen für einen Elektromotor, wie er bei einer elektrischen Bremseinrichtung der eingangs genannten Art verwendet wird, zu überwachen, beispielsweise auf einen sog. Leitungsabriss, also eine Trennung wenigstens einer elektrischen Leitung des Elektromotors derart, dass eine Ansteuerung des Elektromotors nicht mehr (zuverlässig) möglich ist. Nachteilig an den bekannten Ansätzen ist, dass u.U. eine fehlerhafte Erkennung auf einen Leitungsabriss erfolgen kann, also bei den bekannten Verfahren u.U. auch auf einen Leitungsabriss geschlossen wird, obwohl dieser tatsächlich nicht vorhanden ist.

DE 10 2015 213346 A1 beschreibt eine elektrische Parkbremsvorrichtung.

### Offenbarung der Erfindung

Es ist Aufgabe der Erfindung, ein Verfahren der eingangs genannten Art dahingehend zu verbessern, dass die genannten Nachteile vermindert bzw. vermieden werden.

Bei bevorzugten Ausführungsformen ist vorgesehen, dass das Verfahren die folgenden Schritte aufweist: Ermitteln einer einen Innenwiderstand des Elektromotors charakteriserenden ersten Größe, Vergleichen der ersten Größe mit einem vorgebbaren ersten Schwellwert, Ansteuern des Elektromotors für eine vorgebbare erste Ansteuerdauer im Sinne derjenigen Drehrichtung, die einem aktuellen Betriebszustand der Bremseinrichtung entspricht, wenn der Vergleich ergibt, dass die erste Größe den ersten Schwellwert überschreitet.

Untersuchungen der Anmelderin zufolge kann bei den eingangs genannten konventionellen Ansätzen dann fälschlicherweise auf einen Leitungsabriss geschlossen werden, wenn der Elektromotor für eine längere Zeit nicht aktiviert worden ist, die elektrische Bremseinrichtung mithin für eine längere Zeit nicht benutzt worden ist. In diesen Fällen können Komponenten eines Kommutierungssystems des Elektromotors oxidieren, was zu einem höheren Innenwiderstand des Elektromotors führt. Dies wiederum kann bei einer Auswertung auf einen Leitungsabriss hin, die z.B. auf einer Auswertung eines elektrischen Widerstands der Leitungen beruht, fälschlicherweise als Leitungsabriss detektiert werden.

Das Prinzip gemäß den Ausführungsformen ermöglicht demgegenüber vorteilhaft, eine unerwünschte Oxidschicht im Bereich der Komponenten des Kommutierungssystems zu entfernen, sodass widerstandsbasierte Verfahren zur Überwachung auf einen Leitungsabriss hin weniger fehleranfällig sind. Das Entfernen der Oxidschicht erfolgt insbesondere durch das vorstehend beschriebene Ansteuern des Elektromotors für die vorgebbare erste Ansteuerdauer im Sinne derjenigen Drehrichtung, die dem aktuellen Betriebszustand der Bremseinrichtung entspricht. Dadurch ist gleichzeitig vorteilhaft sichergestellt, dass durch die genannte Ansteuerung für die vorgebbare erste Ansteuerdauer kein Wechsel der Bremseinrichtung aus ihrem aktuellen in einen anderen Betriebszustand erfolgt, was die Sicherheit steigert. Insbesondere kann hierdurch vorteilhaft vermieden werden, dass die Bremseinrichtung durch die Ansteuerung von einem aktiven bzw. geschlossenen Zustand in einen nicht aktiven bzw. offenen Zustand versetzt wird und umgekehrt. Über den genannten Schwellwertvergleich der ersten Größe kann weiter vorteilhaft festgestellt werden, ob möglicherweise die genannte unerwünschte Oxidschicht im Bereich des Kommutierungssystems vorliegt. Sofern dies gegeben ist, kann bei bevorzugten Ausführungsformen die genannte Ansteuerung für die erste Ansteuerdauer erfolgen.

Bei weiteren bevorzugten Ausführungsformen kann ein erster Betriebszustand der Bremseinrichtung beispielsweise einem geschlossenen Zustand (Bremseinrichtung aktiv) entsprechen, während ein zweiter Betriebszustand der Bremseinrichtung beispielsweise einem offenen Zustand (Bremseinrichtung inaktiv) entspricht. Bei weiteren Ausführungsformen kann ein Zustandsübergang von dem ersten zu dem zweiten Betriebszustand und umgekehrt durch ein jeweiliges Ansteuern des Elektromotors mit einer entsprechenden Drehrichtung über eine vorgebbare Zustandsänderungs-Ansteuerdauer hin erfolgen. Besonders bevorzugt ist die erste Ansteuerdauer, die eine Ansteuerung zur Entfernung der Oxidschicht zum Gegenstand hat, wesentlich kleiner, insbesondere um wenigstens eine Größenordnung, vorzugsweise mehr als zwei Größenordnungen, kleiner, als die Zustandsänderungs-Ansteuerdauer, die einen erwünschten Wechsel zwischen den möglichen Betriebszuständen der Bremseinrichtung zum Gegenstand hat.

Das Verfahren gemäß den Ausführungsformen kann beispielsweise mittels einer Vorrichtung zum Betreiben des Elektromotors ausgeführt werden. Beispielsweise kann die Vorrichtung auch Teil eines Steuergeräts für die elektrische Bremseinrichtung sein bzw. dem Steuergerät entsprechen.

Bei weiteren bevorzugten Ausführungsformen ist vorgesehen, dass das Ermitteln, und optional auch das Vergleichen, während bzw. nach, insbesondere unmittelbar nach, einer Initialisierung der Vorrichtung ausgeführt wird. Vergleichbares gilt für eine entsprechende Ansteuerung für die erste Ansteuerdauer, sofern die erste Größe den ersten Schwellwert überschreitet. Dadurch kann das Prinzip gemäß den Ausführungsformen vorteilhaft in solchen Betriebszuständen der Vorrichtung genutzt werden, in denen eine vergleichsweise große Wahrscheinlichkeit für das Vorliegen einer Oxidschicht im Bereich des Kommutierungssystems des Elektromotors gegeben ist.

Bei weiteren bevorzugten Ausführungsformen ist vorgesehen, dass der aktuelle Betriebszustand der Bremseinrichtung ermittelt wird, wobei insbesondere der aktuelle Betriebszustand der Bremseinrichtung vor dem Ansteuern ermittelt wird. Dadurch kann zuverlässig festgestellt werden, mit welcher Drehrichtung der Elektromotor während der ersten Ansteuerdauer angesteuert werden soll. Das Ermitteln kann bei weiteren bevorzugten Ausführungsformen beispielsweise durch Auswerten einer zumindest zeitweise durch die Vorrichtung speicherbaren Statusvariablen (z.B. Bitflag) erfolgen. Bei weiteren Ausführungsformen ist vorgesehen, dass die Ansteuerung des Elektromotors während der ersten Ansteuerdauer dann, wenn die Bremseinrichtung inaktiv ist, mit einer Drehrichtung erfolgt, die dem inaktiven Betriebszustand entspricht, und dass die Ansteuerung des Elektromotors während der ersten Ansteuerdauer dann, wenn die Bremseinrichtung aktiv ist, mit einer Drehrichtung erfolgt, die dem aktiven Betriebszustand entspricht.

Bei weiteren bevorzugten Ausführungsformen ist vorgesehen, dass die Schritte des Ermittelns der ersten Größe, und/oder des Vergleichens und/oder des Ansteuerns wiederholt werden, wobei insbesondere die Schritte des Ermittelns der ersten Größe, und/oder des Vergleichens und/oder des Ansteuerns periodisch wiederholt werden. Bei weiteren bevorzugten Ausführungsformen kann der Schritt des Ermittelns der ersten Größe beispielsweise die Ermittlung eines elektrischen Widerstands zwischen den elektrischen Anschlüssen des Elektromotors umfassen und/oder die Ermittlung eines Spannungsabfalls an den elektrischen Anschlüssen des Elektromotors.

Bei weiteren bevorzugten Ausführungsformen ist vorgesehen, dass die Schritte des Ermittelns der ersten Größe und des Vergleichens und des Ansteuerns für eine vorgebbare Maximalzahl von Wiederholungen wiederholt werden, wobei für den Schritt des Ansteuerns wahlweise eine unterschiedliche Ansteuerdauer vorgebbar ist, wobei insbesondere die unterschiedliche Ansteuerdauer Werte zwischen etwa 1 Mikrosekunde und etwa 100 Millisekunden aufweist, insbesondere Werte zwischen etwa 20 Mikrosekunden und etwa 20 Millisekunden. Bei weiteren Ausführungsformen ist vorgesehen, dass die Ansteuerdauer mit der Anzahl von Wiederholungen erhöht wird, um kontinuierlich die Ansteuerenergie für den Elektromotor und damit die Wahrscheinlichkeit für eine Wiederherstellung eines regulären, vergleichsweise niedrigen Innenwiderstands, zu erhöhen.

Bei weiteren bevorzugten Ausführungsformen ist vorgesehen, dass für eine erstmalige Ansteuerung eine erste Ansteuerdauer im Bereich zwischen etwa 1 Mikrosekunde, µs, und etwa 100 µs gewählt wird, insbesondere im Bereich zwischen etwa 20 µs und etwa 60 µs, wobei insbesondere für eine zweite Ansteuerung eine zweite Ansteuerdauer im Bereich zwischen etwa 1 Millisekunde, ms, und etwa 20 ms, insbesondere von etwa 5 ms, gewählt wird.

Weitere vorteilhafte Aspekte beziehen sich auf eine Verwendung des Verfahrens gemäß den Ausführungsformen zur Entfernung einer Oxidschicht an wenigstens einer Komponente eines Kommutierungssystems des Elektromotors.

Bei weiteren bevorzugten Ausführungsformen ist auch denkbar, dass allein eine Ansteuerung für die erste Ansteuerdauer im Sinne der vorstehenden Ausführungsformen (also insbesondere in einem Drehsinn des Elektromotors, der dem aktuellen Betriebszustand der Bremseinrichtung entspricht) ausgeführt wird, insbesondere ohne die Schritte des Ermittelns der ersten Größe und des Vergleichens der ersten Größe mit dem ersten Schwellwert. Dadurch wird der Aufwand verringert, und die Ansteuerung für die erste Ansteuerdauer kann gleichsam prophylaktisch ausgeführt werden. Sofern eine Kontaktverschlechterung im Bereich des Kommutierungssystems z.B. bedingt durch die genannte Oxidschicht vorhanden ist, wird diese demnach entfernt, ohne dass zuvor überprüft worden ist, ob die Kontaktverschlechterung tatsächlich besteht bzw. wie stark sie ausgeprägt ist. Sofern aktuell keine Kontaktverschlechterung besteht, wird die Ansteuerung für die erste Ansteuerdauer dennoch ausgeführt. Bei diesem Aspekt kann die Ansteuerung für die erste Ansteuerdauer vorzugsweise periodisch ausgeführt werden.

Weitere vorteilhafte Aspekte beziehen sich auf eine Verwendung des Verfahrens gemäß den Ausführungsformen für eine Wieder-Gut-Prüfung des Elektromotors und/oder der elektrischen Bremseinrichtung. Sofern, beispielsweise durch ein konventionelles Verfahren (oder den beschriebenen Vergleich mit dem ersten Schwellwert) zur Ermittlung eines Leitungsabrisses, ermittelt worden ist, dass ein Leitungsabriss bei dem Elektromotor vorliegt (oder ein erhöhter Innenwiderstand, beispielsweise verursacht durch eine Oxidschicht im Bereich eines Kommutierungssystems des Elektromotors), kann bevorzugt das Prinzip gemäß den Ausführungsformen angewandt werden, beispielsweise bei weiteren bevorzugten Ausführungsformen umfassend die Schritte des Ermittelns der ersten Größe, Vergleichens der ersten Größe mit dem ersten Schwellwert, und gegebenenfalls Ansteuern des Elektromotors, insbesondere um eine gegebenenfalls vorhandene Oxidschicht zu entfernen, die zu einer möglicherweise falschen Ermittlung eines Leitungsabrisses geführt hat. Sodann kann beispielsweise erneut das konventionelle Verfahren zur Ermittlung des Leitungsabrisses (oder der beschriebene Vergleich mit dem ersten Schwellwert) ausgeführt werden, welches, wenn das Prinzip gemäß den Ausführungsformen erfolgreich ausgeführt worden ist, nicht erneut auf einen Leitungsabriss (oder erhöhten Innenwiderstand) führt, weil durch die Ansteuerung des Elektromotors für die erste Ansteuerdauer die gegebenenfalls vorhandene Oxidschicht entfernt worden ist. Dies entspricht der genannten Wieder-Gut-Prüfung des Elektromotors bzw. der Bremseinrichtung.

Ohne Anwendung des Prinzips gemäß den Ausführungsformen besteht das Risiko, dass infolge einer durch eine Oxidschicht im Bereich des Kommutierungssystems bedingten Widerstandserhöhung fälschlicherweise auf einen Leitungsabriss erkannt wird und die Bremseinrichtung demzufolge mitunter unbrauchbar wird, obwohl tatsächlich kein Leitungsabriss vorliegt, sondern "nur" die genannte Oxidschicht im Bereich des Kommutierungssystems.

Bei weiteren bevorzugten Ausführungsformen kann für die Wieder-Gut-Prüfung eine Ansteuerung gemäß dem Prinzip der Ausführungsformen wiederholt werden, wobei insbesondere eine Ansteuerdauer für unterschiedliche Wiederholungen variiert wird. Bei weiteren vorteilhaften Ausführungsform ist vorgesehen, dass nach einer erfolglosen (insbesondere erstmaligen) Wieder-Gut-Prüfung eine Fehlerreaktion eingeleitet wird, beispielsweise umfassend eine Signalisierung und/oder die Vornahme eines Eintrags in einen Fehlerspeicher oder dergleichen. Bei weiteren bevorzugten Ausführungsformen ist vorgesehen, dass eine Freigabe der Bremseinrichtung in Abhängigkeit wenigstens einer zuvor ausgeführten Wieder-Gut-Prüfung gemäß den Ausführungsformen erfolgt. Bei weiteren bevorzugten Ausführungsformen ist vorgesehen, dass die aktive Wieder-Gut-Prüfung gemäß den vorstehend beschriebenen Ausführungsformen unmittelbar nach einer Erkennung auf einen erhöhten Übergangswiderstand des Elektromotors erfolgt. Bei weiteren bevorzugten Ausführungsformen ist vorgesehen, dass eine aktive Wieder-Gut-Prüfung bei einem nächsten erkannten Fahrzeugstillstand eines die Bremseinrichtung enthaltenen Fahrzeugs erfolgt.

Weitere bevorzugte Ausführungsformen beziehen sich auf eine Vorrichtung zum Betreiben eines Elektromotors für eine elektrische Bremseinrichtung, insbesondere für eine elektrische Feststellbremse eines Fahrzeugs, insbesondere Kraftfahrzeugs, wobei die Bremseinrichtung durch einen Betrieb des Elektromotors in einer ersten Drehrichtung in einen ersten Betriebszustand und durch einen Betrieb des Elektromotors in einer von der ersten Drehrichtung verschiedenen zweiten Drehrichtung in einen zweiten Betriebszustand versetzbar ist, wobei die Vorrichtung zur Ausführung der folgenden Schritte ausgebildet ist: Ermitteln einer einen Innenwiderstand des Elektromotors charakteriserenden ersten Größe, Vergleichen der ersten Größe mit einem vorgebbaren ersten Schwellwert, Ansteuern des Elektromotors für eine vorgebbare erste Ansteuerdauer im Sinne derjenigen Drehrichtung, die einem aktuellen Betriebszustand der Bremseinrichtung entspricht, wenn der Vergleich ergibt, dass die erste Größe den ersten Schwellwert überschreitet.

Bei weiteren bevorzugten Ausführungsformen ist die Vorrichtung zur Ausführung des Verfahrens gemäß den vorstehend beschriebenen Ausführungsformen ausgebildet.

Bei weiteren bevorzugten Ausführungsformen kann die genannte Wieder-Gut-Prüfung beispielsweise durch die Vorrichtung ausgeführt werden. Hierzu kann die Vorrichtung beispielsweise eine Recheneinrichtung und eine zugeordnete Speichereinrichtung sowie ein entsprechendes Computerprogramm aufweisen und/oder eine Hardwareschaltung, die zur Steuerung der entsprechenden Abläufe ausgebildet ist. Beispielsweise kann die Vorrichtung bei weiteren bevorzugten Ausführungsformen auch wenigstens einen anwendungsspezifischen integrierten Schaltkreis (ASIC) aufweisen, der zur Ausführung des Verfahrens gemäß den Ausführungsformen ausgebildet ist.

Bei weiteren bevorzugten Ausführungsformen ist auch denkbar, dass eine elektrische Bremseinrichtung durch eine Vorrichtung bzw. ein Steuergerät gemäß den Ausführungsformen gesteuert wird, um Aspekte des Verfahrens gemäß den Ausführungsformen auszuführen. Beispielsweise kann bei weiteren bevorzugten Ausführungsformen die Vorrichtung einen erhöhten Innenwiderstand des Elektromotors ermitteln und sodann über eine Schnittstelle zu der elektrischen Bremseinrichtung eine erneute Ansteuerung der Bremseinrichtung in eine definierte Richtung gemäß dem Prinzip der vorliegenden Ausführungsformen anfordern. Hierbei wird die Bremseinrichtung die angeforderte Ansteuerung umsetzen, wodurch ebenfalls eine Ansteuerung des Elektromotors der Bremseinrichtung im Sinne der vorstehend beschriebenen Ausführungsform für die vorgebbare erste Ansteuerdauer, insbesondere zum Entfernen einer Oxidschicht beim Kommutierungssystems des Elektromotors, realisierbar ist.

Weitere bevorzugte Ausführungsformen beziehen sich auf ein Steuergerät für eine elektrische Bremseinrichtung, insbesondere für eine elektrische Feststellbremse eines Fahrzeugs, insbesondere Kraftfahrzeugs, wobei das Steuergerät wenigstens eine Vorrichtung gemäß den Ausführungsformen aufweist. Alternativ kann das Steuergerät auch durch die Vorrichtung gebildet sein.

Weitere bevorzugte Ausführungsformen beziehen sich auf eine elektrische Bremseinrichtung, insbesondere elektrische Feststellbremse eines Fahrzeugs, insbesondere Kraftfahrzeugs, wobei die Bremseinrichtung wenigstens eine Vorrichtung und/oder ein Steuergerät gemäß den Ausführungsformen aufweist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
Figur 1 schematisch eine vereinfachte Schaltung zur Ansteuerung eines Elektromotors gemäß einer Ausführungsform,
Figur 2Aschematisch ein vereinfachtes Blockdiagramm einer elektrischen Bremseinrichtung gemäß einer Ausführungsform,

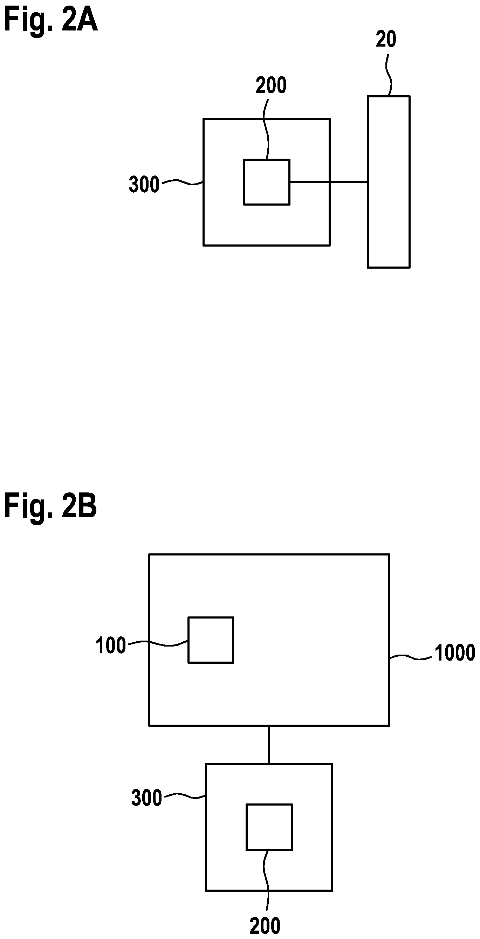

Figur 2Bschematisch ein vereinfachtes Blockdiagramm eines Steuergeräts gemäß einer Ausführungsform,

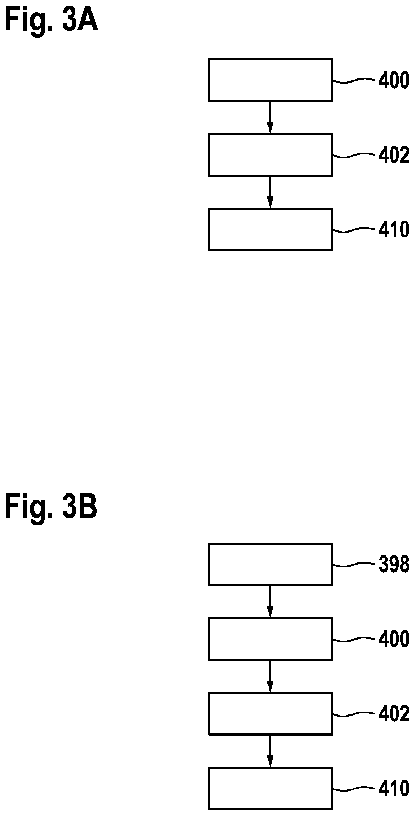

Figur 3Aein vereinfachtes Flussdiagramm eines Verfahrens gemäß einer Ausführungsform,
Figur 3Bein vereinfachtes Flussdiagramm eines Verfahrens gemäß einer weiteren Ausführungsform,

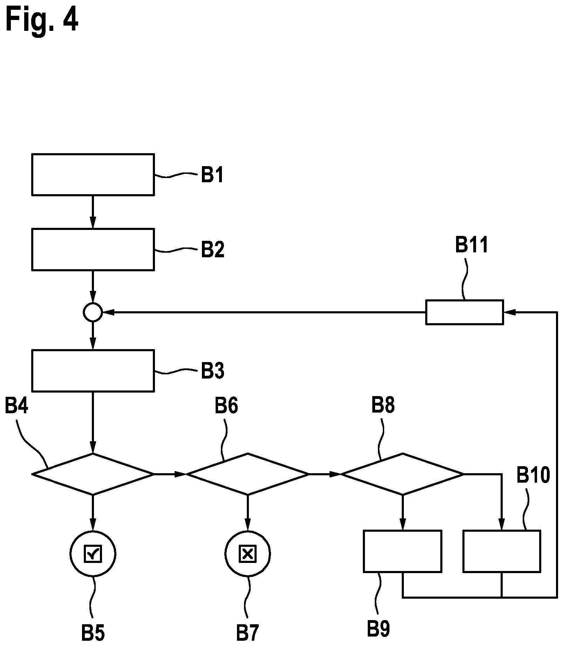

Figur 4 ein vereinfachtes Flussdiagramm eines Verfahrens gemäß einer weiteren Ausführungsform, und

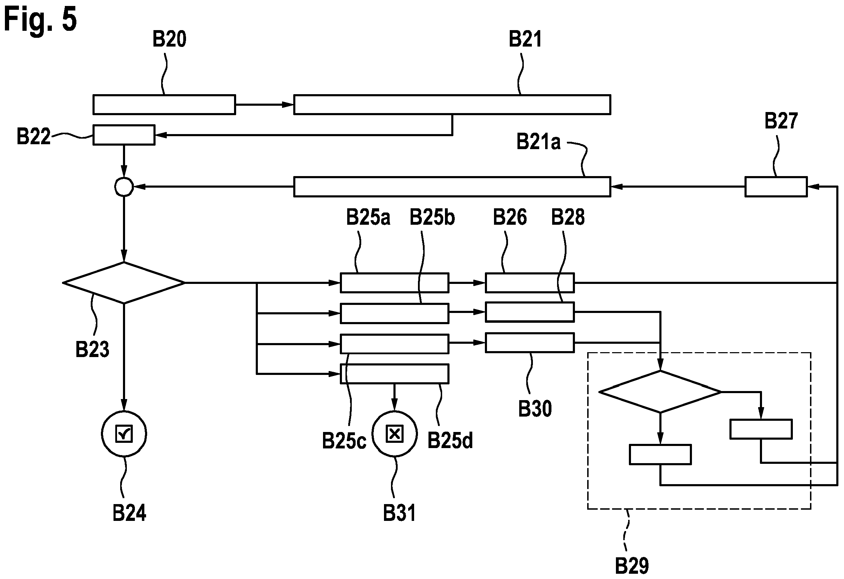

Figur 5 ein vereinfachtes Flussdiagramm eines Verfahrens gemäß einer weiteren Ausführungsform.

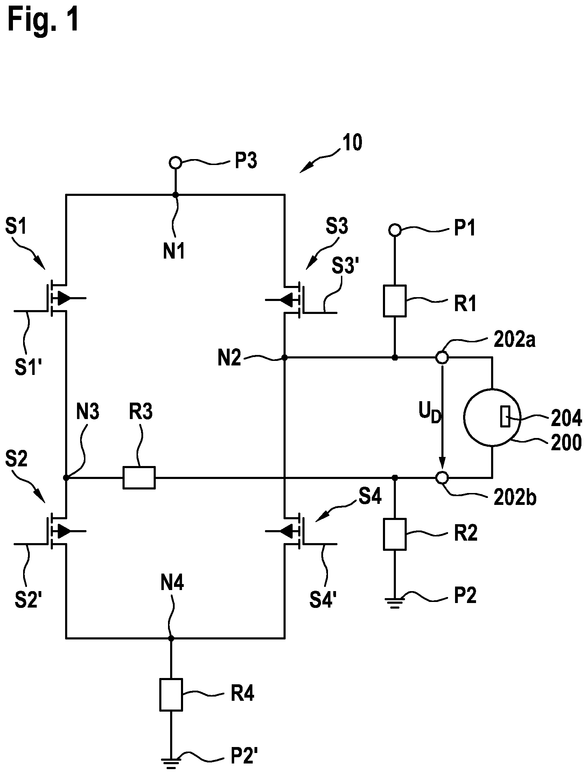

Figur 1 zeigt schematisch eine vereinfachte Schaltung zur Ansteuerung eines Elektromotors 200 für eine elektrische Bremseinrichtung gemäß einer Ausführungsform. Der Elektromotor 200 weist einen ersten elektrischen Anschluss 202a und einen zweiten elektrischen Anschluss 202b auf und ist wie aus Figur 1 ersichtlich elektrisch in Serie geschaltet zu einem ersten Widerstand R1 und einem zweiten Widerstand R2. Die Widerstände R1, R2 können bei bevorzugten Ausführungsformen als sog. pull-up Widerstand (R1) bzw. Pulldown Widerstand (R2) ausgebildet sein, also dazu ausgebildet, den ersten Anschluss 202a auf ein erstes elektrisches Bezugspotenzial P1 zu "ziehen", und den zweiten Anschluss 202b auf ein zweites elektrisches Bezugspotenzial P2 zu "ziehen".

Ferner weist der Elektromotor 200 ein, bevorzugt mechanisches, Kommutierungssystem 204 auf. Ein in Figur 1 oberer Anschluss des ersten Widerstands R1 ist mit dem ersten elektrischen Bezugspotenzial P1 verbunden, und ein in Figur 1 unterer Anschluss des zweiten Widerstands R2 ist mit dem zweiten elektrischen Bezugspotenzial P2, beispielsweise dem Massepotenzial, verbunden. Sofern das erste Bezugspotenzial P1 verschieden ist von dem zweiten Bezugspotenzial P2 ergibt sich ein Stromfluss durch die Serienschaltung der Komponenten R1, 200, R2, der unter anderem von einem elektrischen Innenwiderstand des Elektromotors 200 abhängt. Dementsprechend ergibt sich zwischen den elektrischen Anschlüssen 202a, 202b des Elektromotors 200 ein Spannungsabfall U_{D}.

Die Serienschaltung der Komponenten R1, 200, R2 kann beispielsweise zur elektrischen Überprüfung des Elektromotors 200 bzw. seiner Anschlüsse 202a, 202b verwendet werden, wobei insbesondere ein Leitungsabriss, also beispielsweise eine Unterbrechung wenigstens eines der elektrischen Anschlüsse 202a, 202b erkannt werden kann. Sobald ein Leitungsabriss erkannt worden ist, kann eine Fehlerreaktion eingeleitet werden. Des Weiteren kann auch ein erhöhter Innenwiderstand des Elektromotors 200 mittels der Serienschaltung R1, 200, R2 ermittelt werden, wie er sich beispielsweise bei einer Oxidation des Kommutierungssystems 204 oder von Komponenten des Kommutierungssystems 204 einstellt. Generell ermöglicht die Serienschaltung R1, 200, R2 ein sogenanntes passives Monitoring, also eine Überwachung des Innenwiderstands des Elektromotors 200 bzw. seiner Anschlüsse, ohne dass eine Ansteuerung des Elektromotors 200 hierzu erforderlich ist.

Zur Ansteuerung des Elektromotors 200 ist vorliegend beispielhaft eine vier Halbleiterschalter S1, S2, S3, S4 aufweisende H-Brücke 10 vorgesehen. Die Halbleiterschalter können durch entsprechende Steueranschlüsse S1', S2', S3', S4', beispielsweise Gate-Elektroden-Anschlüsse im Falle von Feldeffekttransistoren S1, S2, S3, S4, angesteuert werden. Ein erster Schaltungsknotenpunkt N1 der H-Brücke 10 ist mit einem dritten Bezugspotenzial P3, das beispielsweise einer Bordnetzspannung eines Kraftfahrzeugs entspricht, verbunden. Ein zweiter Schaltungsknotenpunkt N2 der H-Brücke 10 ist mit dem ersten Anschluss 202a des Elektromotors 200 verbunden. Ein dritter Schaltungsknotenpunkt N3 der H-Brücke 10 ist über einen dritten Widerstand R3 mit dem zweiten Anschluss 202b des Elektromotors 202 verbunden. Ein vierter Schaltungsknotenpunkt N4 der H-Brücke 10 ist über einen vierten Widerstand R4 mit einem weiteren Bezugspotenzial P2' verbunden, dass beispielsweise identisch sein kann zu dem zweiten Bezugspotenzial P2, also vorliegend beispielhaft dem Massepotenzial.

Zur Ansteuerung des Elektromotors 200 im Sinne einer ersten Drehrichtung wird der zweite Halbleiterschalter S2 und der dritte Halbleiterschalter S3 leitend geschaltet, durch entsprechende Ansteuerung der Steueranschlüsse S2', S3'. Die anderen beiden Halbleiterschalter S1, S4 werden sperrend geschaltet. Dadurch ergibt sich ein Stromfluss von dem ersten Schaltungsknotenpunkt N1 über den dritten Halbleiterschalter S3, den zweiten Schaltungsknotenpunkt N2 zu dem ersten elektrischen Anschluss 202a des Elektromotors 200, durch den Elektromotor 200 hindurch, weiter über den zweiten elektrischen Anschluss 202b des Elektromotors 200, den dritten Widerstand R3, den dritten Schaltungsknotenpunkt N3, den zweiten Halbleiterschalter S2, den vierten Schaltungsknotenpunkt N4, und schließlich über den vierten Widerstand R4 zu dem Massepotenzial P2'. Bei bevorzugten Ausführungsformen weisen die Widerstände R3, R4 einen vergleichsweise geringen Widerstand (vorzugsweise kleiner gleich etwa 1 Ohm, weiter vorzugsweise kleiner gleich etwa 0,1 Ohm) auf, sind somit als Shunt-Widerstände ausgebildet.

Bei bevorzugten Ausführungsformen kann der Elektromotor 200 wie vorstehend beschrieben (insbesondere über eine vorgebbare Zustandsänderungs-Ansteuerdauer hin) angesteuert werden, um ihn bzw. die durch ihn betätigbare elektrische Bremseinrichtung 300, vgl. Fig. 2A, in einen ersten Betriebszustand (z.B. Bremseinrichtung aktiv) zu versetzen, in dem sie in an sich bekannter Weise eine Bremswirkung auf wenigstens ein Rad 20 beispielsweise eines Kraftfahrzeugs ausübt.

Bei weiteren bevorzugten Ausführungsformen kann der Elektromotor 200 (Fig. 1) auch derart angesteuert werden, dass er sich in einer zweiten, von der ersten Drehrichtung verschiedenen Drehrichtung, dreht. Hierzu wird der erste Halbleiterschalter S1 und der vierte Halbleiterschalter S4 leitend geschaltet, die anderen beiden Halbleiterschalter S2, S3 werden sperrend geschaltet. Dadurch ergibt sich ein Stromfluss von dem dritten Bezugspotenzial P3 über die weiteren Komponenten N1, S1, N3, R3, 202b, 200, 202a, N2, S4, R4, P2', wodurch sich der Elektromotor 200 in der zweiten Drehrichtung dreht. Hierdurch kann die Bremseinrichtung 300 in einen zweiten Betriebszustand (z.B. Bremseinrichtung inaktiv) versetzt werden. Die entsprechende Ansteuerung kann wiederum insbesondere über eine vorgebbare Zustandsänderungs-Ansteuerdauer hinweg aufrechterhalten werden, um einen zuverlässigen Übergang in den zweiten Betriebszustand sicherzustellen.

Bei bevorzugten Ausführungsformen ist die Ausführung des nachfolgend beispielhaft unter Bezugnahme auf das vereinfachte Flussdiagramm gemäß Figur 3A beschriebenen Verfahrens vorgesehen. In Schritt 400 wird eine erste Größe ermittelt, die einen Innenwiderstand des Elektromotors 200 charakterisiert. Die erste Größe kann dabei beispielsweise dem Spannungsabfall U_{D} (Fig. 1) (oder direkt dem Innenwiderstand) entsprechen. Die erste Größe kann insbesondere auch dann ermittelt werden, wenn alle vier Halbleiterschalter S1, S2, S3, S4 sperrend geschaltet sind, der Elektromotor 200 mithin nicht angesteuert wird. Dies ist durch das Anlegen der Bezugspotenziale P1, P2 an den ersten Widerstand R1 und den zweiten Widerstand R2 ermöglicht (passives Monitoring).

In einem nachfolgenden Schritt 402 (Figur 3A) wird die erste Größe mit einem vorgebbaren ersten Schwellwert verglichen. Der erste Schwellwert wird dabei vorteilhaft so gewählt, dass die erste Größe bei einem regulären Betrieb des Elektromotors 200 den ersten Schwellwert nicht überschreitet, bei einer Oxidation eines Kommutierungssystems des Elektromotors 200 jedoch den ersten Schwellwert überschreitet. Dadurch kann durch den Vergleich in Schritt 402 eine Oxidation des Kommutierungssystems 204 des Elektromotors 200 erkannt werden. Beispielhaft kann der erste Schwellwert - sofern er sich auf den genannten Innenwiderstand bezieht - im Bereich von etwa 700 mΩ (Milliohm) bis etwa 1000 mΩ gewählt werden.

In Schritt 410 kann der Elektromotor 200 für eine vorgebbare erste Ansteuerdauer im Sinne derjenigen Drehrichtung, die einem aktuellen Betriebszustand der Bremseinrichtung 300 entspricht, für eine vorgebbare erste Ansteuerdauer angesteuert werden, wenn der Vergleich 402 ergibt bzw. ergeben hat, dass die erste Größe den ersten Schwellwert überschreitet. Durch die Ansteuerung in Schritt 410 kann somit vorteilhaft das möglicherweise oxidierte Kommutierungssystem 204 des Elektromotors 200 mit elektrischer Energie durch die Ansteuerung für die erste Ansteuerdauer beaufschlagt werden, welche die entsprechende Oxidschicht durchbricht bzw. abbrennt bzw. entfernt.

Dadurch ist vorteilhaft gleichzeitig sichergestellt, dass durch die genannte Ansteuerung für die vorgebbare erste Ansteuerdauer kein Wechsel der Bremseinrichtung 300 aus ihrem aktuellen in einen anderen Betriebszustand erfolgt, was die Sicherheit steigert. Insbesondere kann hierdurch vorteilhaft vermieden werden, dass die Ansteuerung die Bremseinrichtung 300 von einem aktiven bzw. geschlossenen Zustand in einen nicht aktiven bzw. offenen Zustand verbracht wird. Über den genannten Schwellwertvergleich 402 der ersten Größe kann weiter vorteilhaft festgestellt werden, ob möglicherweise die genannte unerwünschte Oxidschicht im Bereich des Kommutierungssystems vorliegt. Sofern dies gegeben ist, kann bei bevorzugten Ausführungsformen die genannte Ansteuerung für die erste Ansteuerdauer erfolgen.

Bei weiteren bevorzugten Ausführungsformen kann ein erster Betriebszustand der Bremseinrichtung 300 beispielsweise einem geschlossenen Zustand (Bremseinrichtung aktiv) entsprechen, während ein zweiter Betriebszustand der Bremseinrichtung beispielsweise einem offenen Zustand (Bremseinrichtung inaktiv) entspricht. Bei weiteren Ausführungsformen kann ein Zustandsübergang von dem ersten zu dem zweiten Betriebszustand und umgekehrt durch ein jeweiliges Ansteuern des Elektromotors 200 mit einer entsprechenden Drehrichtung über die bereits genannte Zustandsübergangs-Ansteuerdauer hinweg erfolgen. Besonders bevorzugt ist die erste Ansteuerdauer, die eine Ansteuerung zur Entfernung der Oxidschicht zum Gegenstand hat, wesentlich kleiner, insbesondere um wenigstens eine oder sogar zwei Größenordnungen kleiner, als die Zustandsübergangs-Ansteuerdauer, die einen beabsichtigten Wechsel zwischen den möglichen Betriebszuständen der Bremseinrichtung 300 zum Gegenstand hat.

Das Verfahren gemäß den Ausführungsformen kann beispielsweise mittels einer Vorrichtung 100, vgl. Fig. 2B, zum Betreiben des Elektromotors 200 ausgeführt werden. Beispielsweise kann die Vorrichtung 100 auch Teil eines Steuergeräts 1000 für die elektrische Bremseinrichtung 300 sein bzw. dem Steuergerät entsprechen.

Bei weiteren bevorzugten Ausführungsformen ist vorgesehen, dass das Ermitteln 400, und optional auch das Vergleichen 402, während bzw. nach, insbesondere unmittelbar nach, einer Initialisierung 398 der Vorrichtung 100 ausgeführt wird, vergleiche das Flussdiagramm aus Figur 3B. Vergleichbares gilt für eine entsprechende Ansteuerung 410 für die erste Ansteuerdauer, sofern die erste Größe den ersten Schwellwert überschreitet. Dadurch kann das Prinzip gemäß den Ausführungsformen vorteilhaft in solchen Betriebszuständen der Vorrichtung 100 genutzt werden, in denen eine vergleichsweise große Wahrscheinlichkeit für das Vorliegen einer Oxidschicht im Bereich des Kommutierungssystems 204 des Elektromotors 200 gegeben ist. Bei weiteren bevorzugten Ausführungsformen kann das Verfahren auch periodisch wiederholt werden bzw. zum Ende eines Fahrzyklus eines Kraftfahrzeugs ausgeführt werden, das eine entsprechende Bremseinrichtung 300 enthält.

Bei weiteren bevorzugten Ausführungsformen ist vorgesehen, dass der aktuelle Betriebszustand der Bremseinrichtung 300 (Fig. 2A) ermittelt wird, wobei insbesondere der aktuelle Betriebszustand der Bremseinrichtung 300 vor dem Ansteuern 410 (Fig. 3A) ermittelt wird. Dadurch kann zuverlässig festgestellt werden, mit welcher Drehrichtung der Elektromotor 200 während der ersten Ansteuerdauer angesteuert werden soll. Wie bereits vorstehend unter Bezugnahme auf Figur 1 beschrieben kann die Drehrichtung des Elektromotors 200 durch die Auswahl der zu aktivierenden Halbleiterschalter der H-Brücke 10 gesteuert bzw. ausgewählt werden.

Das Ermitteln des aktuellen Betriebszustands der Bremseinrichtung 300 kann bei weiteren bevorzugten Ausführungsformen beispielsweise durch Auswerten einer zumindest zeitweise durch die Vorrichtung 100 speicherbaren Statusvariablen (z.B. Bitflag) erfolgen. Bei weiteren Ausführungsformen ist vorgesehen, dass die Ansteuerung des Elektromotors 200 während der ersten Ansteuerdauer dann, wenn die Bremseinrichtung 300 inaktiv ist, mit einer Drehrichtung erfolgt, die dem inaktiven Betriebszustand entspricht, und dass die Ansteuerung des Elektromotors 200 während der ersten Ansteuerdauer dann, wenn die Bremseinrichtung 300 aktiv ist, mit einer Drehrichtung erfolgt, die dem aktiven Betriebszustand entspricht.

Bei weiteren bevorzugten Ausführungsformen ist vorgesehen, dass die Schritte des Ermittelns 400 der ersten Größe, und/oder des Vergleichens 402 und/oder des Ansteuerns 410 wiederholt werden, wobei insbesondere die Schritte des Ermittelns der ersten Größe, und/oder des Vergleichens und/oder des Ansteuerns periodisch wiederholt werden. Bei weiteren bevorzugten Ausführungsformen kann der Schritt 400 des Ermittelns der ersten Größe beispielsweise die Ermittlung eines elektrischen Widerstands zwischen den elektrischen Anschlüssen 202a, 202b des Elektromotors 200 umfassen und/oder die Ermittlung des Spannungsabfalls U_{D} an den elektrischen Anschlüssen 202a, 202b des Elektromotors 200.

Weitere vorteilhafte Aspekte beziehen sich auf eine Verwendung des Verfahrens gemäß den Ausführungsformen zur Entfernung einer Oxidschicht an wenigstens einer Komponente eines Kommutierungssystems 204 des Elektromotors 200. Mit anderen Worten kann das vorstehend beispielhaft unter Bezugnahme auf Figur 3A beschriebene Verfahren wiederholt, insbesondere periodisch, ausgeführt werden, um gezielt eine unerwünschte Oxidschicht im Bereich des Kommutierungssystems 204 des Elektromotors 200 zu entfernen. Damit kann vorteilhaft falschen Ergebnissen bei einer Überprüfung der Konfiguration gemäß Figur 1 auf einen Leitungsabriss hin entgegengewirkt werden.

Weitere vorteilhafte Aspekte beziehen sich auf eine Verwendung des Verfahrens gemäß den Ausführungsformen für eine Wieder-Gut-Prüfung der elektrischen Bremseinrichtung 300. Sofern beispielsweise durch ein konventionelles Verfahren zur Ermittlung eines Leitungsabrisses ermittelt worden ist, dass ein Leitungsabriss bei den Elektromotor 200 vorliegt, kann bevorzugt das Prinzip gemäß den Ausführungsformen angewandt werden, beispielsweise bei bevorzugten Ausführungsformen umfassend die Schritte des Ermittelns 400 der ersten Größe, des Vergleichens 402 der ersten Größe mit dem ersten Schwellwert, und gegebenenfalls Ansteuern 410 des Elektromotors 200, insbesondere um eine gegebenenfalls vorhandene Oxidschicht zu entfernen, die zu einer möglicherweise falschen Ermittlung eines Leitungsabrisses geführt hat. Sodann kann beispielsweise erneut das konventionelle Verfahren zur Ermittlung des Leitungsabrisses ausgeführt werden, welches, wenn das Prinzip gemäß den Ausführungsformen erfolgreich ausgeführt worden ist, nicht erneut auf einen Leitungsabriss führt, weil durch die Ansteuerung 410 des Elektromotors 200 die gegebenenfalls vorhandene Oxidschicht entfernt worden ist. Dies entspricht der genannten Wieder-Gut-Prüfung des Elektromotors 200. Ohne Anwendung des Prinzips gemäß den Ausführungsformen besteht bei der Ausführung einer konventionellen Prüfung auf einen Leitungsabriss hin das Risiko, dass fälschlicherweise auf einen Leitungsabriss erkannt wird und die Bremseinrichtung 300 demzufolge mitunter unbrauchbar wird, obwohl tatsächlich kein Leitungsabriss vorliegt, sondern gegebenenfalls die genannte Oxidschicht im Bereich des Kommutierungssystems 204.

Weitere bevorzugte Ausführungsformen beziehen sich auf eine Vorrichtung 100 zum Betreiben eines Elektromotors für eine elektrische Bremseinrichtung, insbesondere für eine elektrische Feststellbremse eines Fahrzeugs, insbesondere Kraftfahrzeugs, wobei die Bremseinrichtung durch einen Betrieb des Elektromotors in einer ersten Drehrichtung in einen ersten Betriebszustand und durch einen Betrieb des Elektromotors in einer von der ersten Drehrichtung verschiedenen zweiten Drehrichtung in einen zweiten Betriebszustand versetzbar ist, wobei die Vorrichtung zur Ausführung der folgenden Schritte ausgebildet ist: Ermitteln einer einen Innenwiderstand des Elektromotors charakteriserenden ersten Größe, Vergleichen der ersten Größe mit einem vorgebbaren ersten Schwellwert, Ansteuern des Elektromotors für eine vorgebbare erste Ansteuerdauer im Sinne derjenigen Drehrichtung, die einem aktuellen Betriebszustand der Bremseinrichtung entspricht, wenn der Vergleich ergibt, dass die erste Größe den ersten Schwellwert überschreitet. Bei weiteren bevorzugten Ausführungsformen ist die Vorrichtung 100 zur Ausführung des Verfahrens gemäß den vorstehend beschriebenen Ausführungsformen ausgebildet.

Weitere bevorzugte Ausführungsformen beziehen sich auf ein Steuergerät 1000 (Fig. 2B) für eine elektrische Bremseinrichtung 300, insbesondere für eine elektrische Feststellbremse eines Fahrzeugs, insbesondere Kraftfahrzeugs, wobei das Steuergerät 1000 wenigstens eine Vorrichtung 100 gemäß den Ausführungsformen aufweist. Alternativ kann das Steuergerät auch durch die Vorrichtung 100 gebildet sein.

Weitere bevorzugte Ausführungsformen beziehen sich auf eine elektrische Bremseinrichtung 300, insbesondere elektrische Feststellbremse eines Fahrzeugs, insbesondere Kraftfahrzeugs, wobei die Bremseinrichtung wenigstens eine Vorrichtung und/oder ein Steuergerät gemäß den Ausführungsformen aufweist.

Nachstehend sind unter Bezugnahme auf die Figuren 4, 5 weitere bevorzugte Ausführungsformen beschrieben.

In Figur 4 repräsentiert Block B1 eine Initialisierungsphase des Steuergeräts 1000 (Fig. 3B), in der das Steuergerät 1000 beispielsweise seine eigene Funktion prüft, und insbesondere sicherstellt, dass alle Funktionen abgesichert und bereitgestellt sind. In Block B2 wird eine Zählervariable n initialisiert, insbesondere zu Null gesetzt, n=0.

Sodann erfolgt in Block B3 und B4 eine Überprüfung auf einen Leitungsabriss, beispielsweise mittels der Bezugspotenziale P1, P2, vergleiche Figur 1, und einer Auswertung der Differenzspannung U_{D} zwischen den Anschlüssen 202a, 202b in Block B4. Insbesondere erfolgt während der Überprüfung B3, B4 keine aktive Ansteuerung des Elektromotors 200, die Halbleiterschalter S1 bis S4 sind dementsprechend deaktiviert, also hochohmig geschaltet.

Die Überprüfung gemäß Block B3, B4 kann bei bevorzugten Ausführungsformen beispielsweise der Ausführung der Schritte 400 und 402 gemäß Figur 3A entsprechen. Sofern die Überprüfung gemäß Block B3, B4 ergibt, dass kein Leitungsabriss vorliegt, wird die elektrische Bremseinrichtung 300 freigegeben hierzu wird in Block B5 verzweigt.

Sofern die Überprüfung gemäß Block B4 jedoch ergibt, dass ein Leitungsabriss bzw. erhöhter Innenwiderstand des Elektromotors 200 vorliegt (z.B. Differenzspannung U_{D} größer als der vorgebbare erste Schwellwert), wird von Block B4 zu Block B6 verzweigt. In Block B6 wird die Zählervariable n ausgewertet. Insbesondere wird überprüft, ob die Zählervariable einen Wert größer null aufweist, mithin der vorstehend unter Bezugnahme auf Figur 4 beschriebene Ablauf bereits wenigstens einmal vollständig ausgeführt worden ist ("n>0"). Sofern dies der Fall ist, wird Block B7 verzweigt, in dem beispielsweise eine Fehlerreaktion eingeleitet werden kann. Die Fehlerreaktion kann beispielsweise das Ausgeben einer Fehlerinformation an einen Fahrer des die elektrische Bremseinrichtung 300 enthaltenden Kraftfahrzeugs umfassen.

Sofern die Zählervariable n den Wert null aufweist, mithin der gemäß Figur 4 beschriebene Ablauf nicht bereits vollständig ausgeführt worden ist, wird von Block B6 zu Block B8 verzweigt. In Block B8 wird ermittelt, ob sich die elektrische Bremseinrichtung 300 in einem aktiven Betriebszustand ("locked") befindet. Wenn dies der Fall ist wird zu Block B9 verzweigt, in dem der Elektromotor 200 der elektrischen Bremseinrichtung 300 für die vorgebbare erste Ansteuerdauer im Sinne derjenigen Drehrichtung angesteuert wird, die dem aktiven Zustand der Bremseinrichtung 300 entspricht ("Turn2Lock"). Hierdurch wird eine gegebenenfalls vorhandene Oxidschicht bei dem Kommutierungssystem 104 des Elektromotors 200 entfernt, ohne dass siche eine unerwünschte Änderung des Betriebszustands der Bremseinrichtung 300 ergibt.

Sofern in Block B8 ermittelt wird, dass sich die Bremseinrichtung 300 in einem inaktiven Betriebszustand befindet, wird zu Block B10 verzweigt, in dem der Elektromotor 200 der elektrischen Bremseinrichtung 300 für die vorgebbare erste Ansteuerdauer im Sinne derjenigen Drehrichtung angesteuert wird, die dem inaktiven Zustand der Bremseinrichtung 300 entspricht ("Turn2Release"). Auch hierdurch wird eine gegebenenfalls vorhandene Oxidschicht bei dem Kommutierungssystem 104 des Elektromotors 200 entfernt, ohne dass siche eine unerwünschte Änderung des Betriebszustands der Bremseinrichtung 300 ergibt.

Nach der Ansteuerung für die erste Ansteuerdauer, entsprechend dem Block B9 oder B10, wird in Block B11 die Zählervariable n inkrementiert, z.B. n=n+1. Dadurch ist in nachfolgenden Schritten ersichtlich, dass die Ansteuerung gemäß dem Prinzip der Ausführungsformen bereits mindestens einmal stattgefunden hat. Nach Block B11 wird wieder zu Block B3 (Überprüfung) übergegangen. Sofern erwartungsgemäß die Ansteuerung gemäß dem Block B9 oder Block B10 eine Entfernung der Oxidschicht bewirkt hat (mit dem Effekt, dass die erwartete elektrische Leitfähigkeit des Kommutierungssystems wiedergegeben ist), wird nun bei der neuerlichen Ausführung der Überprüfung gemäß Block B3 nicht erneut fälschlicherweise auf Leitungsabriss erkannt werden, vergleiche Block B4, und es wird zu Block B5 übergegangen, was einer Wieder-Gut-Prüfung entspricht.

Sofern die Überprüfung gemäß Block B4 jedoch ergibt, dass das Problem fortbesteht, wird erneut zu Block B6 übergegangen, in dem die Zählervariable n ausgewertet wird. Sofern die Zählervariable n einen Wert größer null aufweist, was gemäß dem vorliegend beispielhaft beschriebenen Ablauf der Fall ist, wird zu Block B7 verzweigt. Dies kann gerechtfertigt sein, da bereits eine Ansteuerung gemäß dem Prinzip der Ausführungsformen stattgefunden hat, vergleiche Block B9 oder Block B10, und da hierdurch offensichtlich keine Verbesserung der Situation bezüglich der Überprüfung gemäß den Blöcken B3, B4 eingetreten ist. Dieses Szenario stellt sich beispielsweise auch dann ein, wenn tatsächlich ein Leitungsabriss vorhanden ist. Wenn jedoch eine Oxidschicht im Bereich des Kommutierungssystems 204 des Elektromotors 200 vorhanden ist, die durch die Ansteuerung gemäß den Blöcken B9, B10 entfernt werden kann, wird, wie vorstehend bereits beschrieben, nach neuerlicher Ausführung der Überprüfung gemäß den Schritten B3, B4 zu dem Block B5 übergegangen, was der bereits ebenfalls genannten Wieder-Gut-Prüfung entspricht.

Nachstehend wird unter Bezugnahme auf das Blockdiagramm gemäß Figur 5 eine weitere bevorzugte Ausführungsform beschrieben. In Figur 5 repräsentiert Block B20 eine Initialisierungsphase des Steuergeräts 1000 (Fig. 3B), in der das Steuergerät 1000 beispielsweise seine eigene Funktion prüft, und insbesondere sicherstellt, dass alle Funktionen abgesichert und bereitgestellt sind. In Block B21 erfolgt eine vorzugsweise periodische bzw. zyklische Prüfung darauf hin, ob die den Innenwiderstand des Elektromotors 200 charakterisierende erste Größe den vorgebbaren ersten Schwellwert überschreitet, mithin ob der Elektromotor 200 einen erhöhten Innenwiderstand bzw. Übergangswiderstand beispielsweise im Bereich seines Kommutierungssystems 204 aufweist. Sofern dies der Fall ist, wird zu Block B22 übergegangen, in dem eine Zählervariable n initialisiert, insbesondere zu Null gesetzt, wird, n=0.

Optional kann in dem nachfolgenden Block B23 geprüft werden, ob immer noch, also auch nach der Initialisierung der Zählervariable gemäß Block B22 der in Block B21 festgestellte erhöhte Innenwiderstand bzw. Übergangswiderstand vorliegt. Sofern dies nicht der Fall ist wird zu Block B24 verzweigt.

Sofern dies jedoch der Fall ist, wird dann, wenn die Zählervariable ihren Initialisierungswert (n=0) aufweist, vergleiche Block B25a, zu Block B26 verzweigt. In Block B26 wird ein Motortest-Puls, also eine Ansteuerung im Sinne des Prinzips gemäß den Ausführungsformen für die vorgebbare erste Ansteuerdauer und insbesondere in derjenigen Drehrichtung, die einem aktuellen Betriebszustand der Bremseinrichtung 300 entspricht, ausgeführt. Besonders bevorzugt kann in Block B26 die erste Ansteuerdauer beispielsweise zu wenigen 10 µs gewählt werden, beispielsweise 40 µs oder 60 µs oder 80 µs oder dergleichen. Die Ansteuerung des Elektromotors 200 für diese erste Ansteuerdauer kann bevorzugt durch einen anwendungsspezifischen integrierten Schaltkreis (ASIC) ausgeführt werden, der zur Ansteuerung der Halbleiterschalter S1, .., S4 der H-Brücke 10 gemäß Figur 1 ausgebildet ist. Alternativ kann diese Ansteuerung auch durch eine diskrete Logikschaltung oder dergleichen ausgeführt werden. Dadurch, dass die Ansteuerung gemäß Block B26 eine vergleichsweise kurze Einschaltdauer für den Elektromotor 200 darstellt, wird sich der Elektromotor 200 aufgrund dieser Ansteuerung nicht drehen, weil die mittels der Ansteuerung B26 eingetragene Energiemenge hierfür nicht ausreichend ist. Dementsprechend kann bei weiteren bevorzugten Ausführungsformen für die Ansteuerung gemäß Block B26 auch unberücksichtigt bleiben, in welchem Betriebszustand sich die Bremseinrichtung 300 momentan befindet, da aufgrund der vergleichsweise kurzen ersten Ansteuerdauer ausgeschlossen ist, dass überhaupt eine Drehung des Elektromotors 200 und damit eine möglicherweise einhergehende Betriebszustandsänderung der Bremseinrichtung erfolgt. Bei weiteren Ausführungsformen kann jedoch auch für die Ansteuerung gemäß Block B26 der aktuelle Betriebszustand der Bremseinrichtung 300 ausgewertet werden und die Ansteuerung des Elektromotors 200 im Sinne (Drehrichtung) des aktuellen Betriebszustands ausgeführt werden.

Anschließend wird die Zählervariable n in dem Block B27 inkrementiert (n=n+1), und es erfolgt in Block B21a eine neuerliche Prüfung auf Leitungsabriss bzw. erhöhten Innenwiderstand bzw. Übergangswiderstand des Elektromotors 200, vergleichbar zu Block B21. Sofern die neuerliche Prüfung gemäß Block B21a ergibt, dass kein erhöhter Innenwiderstand bzw. Übergangswiderstand des Elektromotors 200 mehr vorliegt (vergleiche Block B23), wird zu Block B24 verzweigt, was einer erfolgreichen Wieder-gut-Prüfung entspricht.

Sofern die neuerliche Prüfung gemäß Block B21a jedoch ergibt, dass nach wie vor ein erhöhter Innenwiderstand vorliegt, wird dann, wenn die Zählervariable einen Wert von n=1 aufweist, vergleiche Block B25b, zu Block B28 verzweigt. In Block B28 wird erneut ein Motortest-Puls, also eine Ansteuerung im Sinne des Prinzips gemäß den Ausführungsformen, ausgeführt, diesmal jedoch für eine vorgebbare zweite Ansteuerdauer, die größer ist als die erste Ansteuerdauer, beispielsweise um wenigstens eine Größenordnung größer als die erste Ansteuerdauer. Bei bevorzugten Ausführungsformen kann die zweite Ansteuerdauer für Block B28 beispielsweise etwa 1 ms bis etwa 20 ms, vorzugsweise etwa 5 ms, betragen. Die Ansteuerung des Elektromotors 200 gemäß Block B28 erfolgt dabei bevorzugt im Sinne derjenigen Drehrichtung, die einem aktuellen Betriebszustand der Bremseinrichtung entspricht, wiederum um eine unerwünschte Betriebszustands Änderung der Bremseinrichtung durch die Ansteuerung des Elektromotors 200 gemäß Block B 28 zu verhindern. Die betreffende Auswertung des aktuellen Betriebszustands des Elektromotors 200 und die Ansteuerung gemäß Block B28 im Sinne der korrekten Drehrichtung ist in Figur 5 durch die Blöcke B29 symbolisiert, die im wesentlichen den Blöcken B8, B9, B10 gemäß Figur 4 entsprechen.

Sodann wird erneut zu Block B27 übergegangen, in dem die Zählervariable inkrementierend wird. D. h., nach der neuerlichen Ausführung des Block B27 weist die Zählervariable n den Wert n=2 auf. Sodann erfolgt eine neuerliche Überprüfung B21a wie vorstehend bereits beschrieben mit der Möglichkeit des Übergangs in Block B24, sofern kein erhöhter Innenwiderstand mehr vorliegt. Sofern nach wie vor ein erhöhter Innenwiderstand vorliegt, wird mittels Block B25c für den Fall n=2, zu Block B30 verzweigt, in dem eine neuerliche Ansteuerung des Elektromotors, diesmal für eine dritte Ansteuerdauer, die bevorzugt größer ist als die zweite Ansteuerdauer, gemäß Block B28, erfolgt. Beispielsweise kann die dritte Ansteuerdauer Werte zwischen etwa 10 ms und etwa 50 ms annehmen, insbesondere etwa 20 ms. Es versteht sich, dass auch für die dritte Ansteuerdauer sichergestellt sein muss, dass kein unerwünschter Betriebszustandsübergang der Bremseinrichtung 300 erfolgt, was wiederum durch die Blöcke B29 sichergestellt ist. Sofern auch nach der Ansteuerung mit der dritten Ansteuerdauer, vergleiche Blöcke B30, B29 keine Wiederherstellung des regulären, Vergleichsweise niedrigen, Innenwiderstands des Elektromotors 200 erzielt werden kann, wird über die Blöcke B27, B21a, B23, B25d zu Block B31 verzweigt, der einen Fehlerzustand repräsentiert. In Block B31 kann beispielsweise vorgesehen sein, eine Fehlerreaktion einzuleiten, beispielsweise einen Fahrer eines Kraftfahrzeugs, das die Bremseinrichtung 300 enthält, mittels einer akustischen und/oder visuellen Signalisierung über den Zustand zu informieren und/oder einen Eintrag in einen Fehlerspeicher zu bewirken.

Sofern nach der Ansteuerung mit der dritten Ansteuerdauer der reguläre, Vergleichsweise niedrige, Innenwiderstand des Elektromotors 200 wiederhergestellt ist (durch Entfernung der Oxidschicht mittels der Ansteuerungen B26, B20, B30, B29) kann bei dem Wert der Zählervariable von n=3 ausgehend von Block B23 zu Block B24 übergegangen werden, was eine erfolgreiche Wieder-Gut-Prüfung repräsentiert.

Es versteht sich, dass bei weiteren bevorzugten Ausführungsformen sowohl die Anzahl n der unterschiedlichen Ansteuerungen gemäß den beispielhaft beschriebenen Blöcken B26 bis B30 als auch die jeweilige Ansteuerdauer für die entsprechenden Ansteuerung variiert werden können. Beispielsweise können bei weiteren bevorzugten Ausführungsformen mehr als die vorstehend beispielhaft unter Bezugnahme auf Figur 5 beschriebenen vier Fallunterscheidungen (n=0, .., n=3) vorgenommen werden, um ein noch feiner abgestuftes Verfahren zu ermöglichen. Bei weiteren Ausführungsformen sind auch weniger als vier Fallunterscheidungen denkbar.

Das Prinzip gemäß den Ausführungsformen kann vorteilhaft für alle elektrischen Bremseinrichtungen 300 eingesetzt werden, insbesondere für solche, die mit einem als Gleichstrommotor (DC-Motor) ausgebildeten Elektromotor 200 ausgestattet sind. Besonders bevorzugt eignet sich das Prinzip gemäß den Ausführungsformen für solche Elektromotoren, die ein mechanisches Kommutierungssystem 204 aufweisen.

Bei weiteren bevorzugten Ausführungsformen ist auch denkbar, dass allein eine Ansteuerung 410 (Fig. 3A) für die erste Ansteuerdauer im Sinne der vorstehenden Ausführungsformen (also insbesondere in einem Drehsinn des Elektromotors 200, der dem aktuellen Betriebszustand der Bremseinrichtung entspricht) ausgeführt wird, insbesondere ohne die Schritte des Ermittelns 400 der ersten Größe und des Vergleichens 402 der ersten Größe mit dem ersten Schwellwert. Dadurch wird der Aufwand verringert, und die Ansteuerung 410 für die erste Ansteuerdauer kann gleichsam prophylaktisch ausgeführt werden. Sofern eine Kontaktverschlechterung im Bereich des Kommutierungssystems 204 z.B. bedingt durch die genannte Oxidschicht vorhanden ist, wird diese demnach entfernt, ohne dass zuvor überprüft worden ist, ob die Kontaktverschlechterung tatsächlich besteht bzw. wie stark sie ausgeprägt ist. Sofern aktuell keine Kontaktverschlechterung besteht, wird die Ansteuerung 410 für die erste Ansteuerdauer dennoch ausgeführt. Bei diesem Aspekt kann die Ansteuerung 410 für die erste Ansteuerdauer vorzugsweise periodisch ausgeführt werden.

## Patentansprüche

1. Verfahren zum Betreiben eines Elektromotors (200) für eine elektrische Bremseinrichtung (300), insbesondere für eine elektrische Feststellbremse eines Fahrzeugs, insbesondere Kraftfahrzeugs, wobei die Bremseinrichtung (300) durch einen Betrieb des Elektromotors (200) in einer ersten Drehrichtung in einen ersten Betriebszustand und durch einen Betrieb des Elektromotors (200) in einer von der ersten Drehrichtung verschiedenen zweiten Drehrichtung in einen zweiten Betriebszustand versetzbar ist, **dadurch gekennzeichnet, daß**
das Verfahren die folgenden Schritte aufweist: Ermitteln (400), insbesondere mittels einer Vorrichtung (100), einer einen Innenwiderstand des Elektromotors (200) charakteriserenden ersten Größe, Vergleichen (402), insbesondere mittels der Vorrichtung (100), der ersten Größe mit einem vorgebbaren ersten Schwellwert, Ansteuern (410) des Elektromotors (200), insbesondere mittels der Vorrichtung (100), für eine vorgebbare erste Ansteuerdauer im Sinne derjenigen Drehrichtung, die einem aktuellen Betriebszustand der Bremseinrichtung (300) entspricht, wenn der Vergleich (402) ergibt, dass die erste Größe den ersten Schwellwert überschreitet.

2. Verfahren nach Anspruch 1, wobei das Ermitteln (400), und optional auch das Vergleichen (402), während bzw. nach, insbesondere unmittelbar nach, einer Initialisierung der Vorrichtung (100) ausgeführt wird.

3. Verfahren nach wenigstens einem der vorstehenden Ansprüche, wobei der aktuelle Betriebszustand der Bremseinrichtung (300) ermittelt wird, wobei insbesondere der aktuelle Betriebszustand der Bremseinrichtung (300) vor dem Ansteuern (410) ermittelt wird.

4. Verfahren nach wenigstens einem der vorstehenden Ansprüche, wobei die Schritte des Ermittelns (400) der ersten Größe, und/oder des Vergleichens (402) und/oder des Ansteuerns (410) wiederholt werden, wobei insbesondere die Schritte des Ermittelns (400) der ersten Größe, und/oder des Vergleichens (402) und/oder des Ansteuerns (410) periodisch wiederholt werden.

5. Verfahren nach Anspruch 4, wobei die Schritte des Ermittelns (400) der ersten Größe und des Vergleichens (402) und des Ansteuerns (410) für eine vorgebbare Maximalzahl von Wiederholungen wiederholt werden, und wobei für den Schritt des Ansteuerns (410) wahlweise eine unterschiedliche Ansteuerdauer vorgebbar ist, wobei insbesondere die unterschiedliche Ansteuerdauer Werte zwischen etwa 1 Mikrosekunde und etwa 100 Millisekunden aufweist, insbesondere Werte zwischen etwa 20 Mikrosekunden und etwa 20 Millisekunden.

6. Verfahren nach Anspruch 5, wobei für eine erstmalige Ansteuerung (410; B26, B29) eine erste Ansteuerdauer im Bereich zwischen etwa 1 Mikrosekunde, µs, und etwa 100 µs gewählt wird, insbesondere im Bereich zwischen etwa 20 µs und etwa 60 µs, wobei insbesondere für eine zweite Ansteuerung (410; B28, B29) eine zweite Ansteuerdauer im Bereich zwischen etwa 1 Millisekunde, ms, und etwa 20 ms, insbesondere von etwa 5 ms, gewählt wird.

7. Verwendung des Verfahrens nach wenigstens einem der vorstehenden Ansprüche zur Entfernung einer Oxidschicht an wenigstens einer Komponente eines Kommutierungssystems (204) des Elektromotors (200).

8. Verwendung des Verfahrens nach wenigstens einem der vorstehenden Ansprüche für eine Wieder-Gut-Prüfung der elektrischen Bremseinrichtung (300).

9. Vorrichtung (100) zum Betreiben eines Elektromotors (200) für eine elektrische Bremseinrichtung (300), insbesondere für eine elektrische Feststellbremse eines Fahrzeugs, insbesondere Kraftfahrzeugs, wobei die Bremseinrichtung (300) durch einen Betrieb des Elektromotors (200) in einer ersten Drehrichtung in einen ersten Betriebszustand und durch einen Betrieb des Elektromotors (200) in einer von der ersten Drehrichtung verschiedenen zweiten Drehrichtung in einen zweiten Betriebszustand versetzbar ist, **dadurch gekennzeichnet, daß**
die Vorrichtung (100) zur Ausführung der folgenden Schritte ausgebildet ist: Ermitteln (400) einer einen Innenwiderstand des Elektromotors (200) charakteriserenden ersten Größe, Vergleichen (402) der ersten Größe mit einem vorgebbaren ersten Schwellwert, Ansteuern (410) des Elektromotors (200) für eine vorgebbare erste Ansteuerdauer im Sinne derjenigen Drehrichtung, die einem aktuellen Betriebszustand der Bremseinrichtung (300) entspricht, wenn der Vergleich (402) ergibt, dass die erste Größe den ersten Schwellwert überschreitet.

10. Vorrichtung (100) nach Anspruch 9, wobei die Vorrichtung (100) zur Ausführung des Verfahrens nach wenigstens einem der Ansprüche 2 bis 8 ausgebildet ist.

11. Steuergerät (1000) für eine elektrische Bremseinrichtung (300), insbesondere für eine elektrische Feststellbremse eines Fahrzeugs, insbesondere Kraftfahrzeugs, wobei das Steuergerät (1000) wenigstens eine Vorrichtung (100) nach wenigstens einem der Ansprüche 9 bis 10 aufweist.

12. Elektrische Bremseinrichtung (300), insbesondere elektrische Feststellbremse eines Fahrzeugs, insbesondere Kraftfahrzeugs, wobei die Bremseinrichtung (300) wenigstens eine Vorrichtung (100) nach wenigstens einem der Ansprüche 9 bis 10 und/oder ein Steuergerät (1000) nach Anspruch 11 aufweist.

## Claims

1. Method for operating an electric motor (200) for an electric brake device (300), in particular for an electric parking brake of a vehicle, in particular motor vehicle, wherein the brake device (300) can be moved to a first operating state by operation of the electric motor (200) in a first direction of rotation and to a second operating state by operation of the electric motor (200) in a second direction of rotation which is different from the first direction of rotation, **characterized in that** the method comprises the following steps: determination (400), in particular by means of an apparatus (100), of a first variable which characterizes an internal resistance of the electric motor (200), comparison (402), in particular by means of the device (100), of the first variable with a specifiable first threshold value, actuation (410) of the electric motor (200), in particular by means of the apparatus (100), for a specifiable first actuation period in the sense of that direction of rotation which corresponds to a current operating state of the brake device (300) when the comparison (402) shows that the first variable exceeds the first threshold value.

2. Method according to Claim 1, wherein the determination (400) and optionally also the comparison (402) is/are executed during or after, in particular immediately after, initialization of the apparatus (100).

3. Method according to at least one of the preceding claims, wherein the current operating state of the brake device (300) is determined, wherein in particular the current operating state of the brake device (300) is determined before the actuation (410).

4. Method according to at least one of the preceding claims, wherein the steps of determination (400) of the first variable and/or comparison (402) and/or actuation (410) are repeated, wherein in particular the steps of determination (400) of the first variable and/or comparison (402) and/or actuation (410) are repeated periodically.

5. Method according to Claim 4, wherein the steps of determination (400) of the first variable and comparison (402) and actuation (410) are repeated for a specifiable maximum number of repetitions, and wherein a different actuation period can be selectively specified for the step of actuation (410), wherein in particular the different actuation period has values of between approximately 1 microsecond and approximately 100 milliseconds, in particular values of between approximately 20 microseconds and approximately 20 milliseconds.

6. Method according to Claim 5, wherein a first actuation period in the range of between approximately 1 microsecond, µs, and approximately 100 µs, in particular in the range of between approximately 20 µs and approximately 60 µs, is selected for initial actuation (410; B26, B29), wherein in particular a second actuation period in the range of between approximately 1 millisecond, ms, and approximately 20 ms, in particular of approximately 5 ms, is selected for second actuation (410; B28, B29).

7. Use of the method according to at least one of the preceding claims for removing an oxide layer from at least one component of a commutation system (204) of the electric motor (200).

8. Use of the method according to at least one of the preceding claims for restored function testing of the electric brake device (300).

9. Apparatus (100) for operating an electric motor (200) for an electric brake device (300), in particular for an electric parking brake of a vehicle, in particular motor vehicle, wherein the brake device (300) can be moved to a first operating state by operation of the electric motor (200) in a first direction of rotation and to a second operating state by operation of the electric motor (200) in a second direction of rotation which is different from the first direction of rotation, **characterized in that** the apparatus (100) is designed to execute the following steps: determination (400) of a first variable which characterizes an internal resistance of the electric motor (200), comparison (402) of the first variable with a specifiable first threshold value, actuation (410) of the electric motor (200) for a specifiable first actuation period in the sense of that direction of rotation which corresponds to a current operating state of the brake device (300) when the comparison (402) shows that the first variable exceeds the first threshold value.

10. Apparatus (100) according to Claim 9, wherein the apparatus (100) is designed to execute the method according to at least one of Claims 2 to 8.

11. Controller (1000) for an electric brake device (300), in particular for an electric parking brake of a vehicle, in particular motor vehicle, wherein the controller (1000) has at least one apparatus (100) according to at least one of Claims 9 and 10.

12. Electric brake device (300), in particular electric parking brake of a vehicle, in particular motor vehicle, wherein the brake device (300) has at least one apparatus (100) according to at least one of Claims 9 and 10 and/or a controller (1000) according to Claim 11.

## Revendications

1. Procédé de fonctionnement d'un moteur électrique (200) destiné à un organe de freinage électrique (300), notamment un frein de stationnement électrique d'un véhicule, notamment d'un véhicule automobile, l'organe de freinage (300) pouvant être placé dans un premier état de fonctionnement lorsque le moteur électrique (200) fonctionne dans un premier sens de rotation et dans un deuxième état de fonctionnement lorsque le moteur électrique (200) fonctionne dans un deuxième sens de rotation différent du premier sens de rotation, **caractérisé en ce que**
le procédé comporte les étapes suivantes : déterminer (400), notamment au moyen d'un dispositif (100), une première grandeur caractérisant une résistance interne du moteur électrique (200), comparer (402), notamment au moyen du dispositif (100), la première grandeur à une première valeur de seuil spécifiable, commander (410) le moteur électrique (200), en particulier au moyen du dispositif (100), pendant une première durée de commande spécifiable en fonction du sens de rotation qui correspond à un état de fonctionnement actuel de l'organe de freinage (300) si la comparaison (402) donne pour résultat que la première grandeur dépasse la première valeur de seuil.

2. Procédé selon la revendication 1, la détermination (400) et éventuellement aussi la comparaison (402) étant effectuées pendant ou après, en particulier immédiatement après, une initialisation du dispositif (100) .

3. Procédé selon l'une au moins des revendications précédentes, l'état de fonctionnement actuel de l'organe de freinage (300) étant déterminé, en particulier l'état de fonctionnement actuel de l'organe de freinage (300) étant déterminé avant l'actionnement (410) .

4. Procédé selon l'une au moins des revendications précédentes, les étapes de détermination (400) de la première grandeur et/ou de comparaison (402) et/ou de commande (410) étant répétées, en particulier les étapes de détermination (400) de la première grandeur et/ou de comparaison (402) et/ou de commande (410) étant répétées périodiquement.

5. Procédé selon la revendication 4, les étapes de détermination (400) de la première grandeur et de comparaison (402) et de commande (410) étant répétées avec un nombre maximum prédéfini de répétitions, et une durée de commande différente pouvant éventuellement être spécifiée pour l'étape de commande (410), notamment la durée de commande différente ayant des valeurs comprises entre environ 1 microseconde et environ 100 millisecondes, notamment des valeurs comprises entre environ 20 microsecondes et environ 20 millisecondes.

6. Procédé selon la revendication 5, pour une première commande (410 ; B26, B29), une première durée de commande étant choisie dans la gamme comprise entre environ 1 microseconde, µs, et environ 100 µs, en particulier dans la gamme comprise entre environ 20 µs et environ 60 µs, en particulier pour une deuxième commande (410 ; B28, B29), une deuxième durée de commande étant choisie dans la gamme comprise entre 1 milliseconde, ms, et environ 20 ms, en particulier étant d'environ 5 ms.

7. Utilisation du procédé selon l'une au moins des revendications précédentes pour enlever une couche d'oxyde sur au moins un composant d'un système de commutation (204) du moteur électrique (200).

8. Utilisation du procédé selon l'une au moins des revendications précédentes pour vérifier que l'organe de freinage électrique (300) fonctionne à nouveau correctement.

9. Dispositif (100) destiné à faire fonctionner un moteur électrique (200) destiné à un organe de freinage électrique (300), notamment à un frein de stationnement électrique d'un véhicule, notamment d'un véhicule automobile, l'organe de freinage (300) pouvant être placé dans un premier état de fonctionnement lorsque le moteur électrique (200) fonctionne dans un premier sens de rotation et dans un deuxième état de fonctionnement lorsque le moteur électrique (200) fonctionne dans un deuxième sens de rotation différent du premier sens de rotation, **caractérisé en ce que**
le dispositif (100) est conçu pour effectuer les étapes suivantes : déterminer (400) une première grandeur caractérisant une résistance interne du moteur électrique (200), comparer (402) la première grandeur à une première valeur de seuil spécifiable, commander (410) le moteur électrique (200) pendant une première durée de commande spécifiable en fonction du sens de rotation qui correspond à un état de fonctionnement actuel de l'organe de freinage (300) si la comparaison (402) donne pour résultat que la première grandeur dépasse la première valeur de seuil.

10. Dispositif (100) selon la revendication 9, le dispositif (100) étant conçu pour mettre en œuvre le procédé selon l'une au moins des revendications 2 à 8.

11. Unité de commande (1000) destinée à un organe de freinage électrique (300), notamment à un frein de stationnement électrique d'un véhicule, notamment d'un véhicule automobile, l'unité de commande (1000) comportant au moins un dispositif (100) selon l'une au moins des revendications 9 à 10.

12. Organe de freinage électrique (300), notamment frein de stationnement électrique d'un véhicule, notamment d'un véhicule automobile, l'organe de freinage (300) comportant au moins un dispositif (100) selon l'une au moins des revendications 9 à 10 et/ou une unité de commande (1000) selon la revendication 11.
